# EUROPEAN PATENT SPECIFICATION

(11) **EP 3 486 074 B1**
(45) Date of publication and mention of the grant of the patent: **03.04.2024**
(21) Application number: 17382773.4
(22) Date of filing: 15.11.2017
(51) Int. Cl.: B29C 65/50, F16B 5/06, B29C 70/74, B29C 65/56, B29L 31/00, B29L 31/30, F16B 2/10, F16B 7/04, F16B 9/02

(54) **COMPOSITE STRUCTURE HAVING AN INTEGRATED SUPPORT, ATTACHABLE SYSTEM COMPRISING THE COMPOSITE STRUCTURE, AND METHOD FOR MANUFACTURING SAID COMPOSITE STRUCTURE**
VERBUNDSTRUKTUR MIT INTEGRIERTEM TRÄGER, BEFESTIGBARES SYSTEM MIT DER VERBUNDSTRUKTUR UND VERFAHREN ZUR HERSTELLUNG DER VERBUNDSTRUKTUR
STRUCTURE COMPOSITE COMPORTANT UN SUPPORT INTÉGRÉ, SYSTÈME ATTACHABLE COMPRENANT LA STRUCTURE COMPOSITE ET PROCÉDÉ DE FABRICATION DE LADITE STRUCTURE COMPOSITE

(43) Date of publication of application: 22.05.2019
(73) Proprietor: Airbus Operations S.L., 28906 Getafe (ES)
(72) Inventor: GARCIA NIETO, Carlos, 28906 Getafe (ES); RODRIGUEZ URBINA, Luis Manuel, 28906 Getafe (ES); HONORATO RUIZ, Francisco Javier, 28906 Getafe (ES); GUINALDO FERNANDEZ, Enrique, 28906 Getafe (ES); SANCHEZ FRANCO, Diego, 28906 Getafe (ES)

(56) References cited:
- EP-A2- 2 336 021

## Description

### Object of the invention

The present invention refers to a configuration and a manufacturing method of a composite structure for an aircraft having an integrated insert for receiving attachment devices. The invention further refers to an attachable system that comprises the composite structure with the integrated insert, and an attachment device to attach external routings (ducts of the hydraulic system and wirings of the electric system) to the insert.

An object of the invention is to provide a composite structure for an aircraft that includes an insert for receiving attachment devices, and which can be manufactured in one-shot, that is, with only one curing cycle, in order to reduce manufacturing time and production costs.

Another object of the invention is to provide a composite structure for an aircraft that facilitates the installation of supports (inserts), specially in areas with limited access, at the same time that reduces the maintenance tasks and downtime.

Another object of the invention is to provide a composite structure for an aircraft that is capable of reducing the weight traditionally involved by structures equipped with external supports, but which at the same time can serve as a structural component withstanding higher loads that the traditional structures.

Another object of the invention is to provide a method for manufacturing a composite structure with an integrated insert for receiving attachment devices, which is capable of offering a fast and cost-effective composite structure in respect with the time traditionally required for the manufacturing and the supports installation.

### Background of the invention

On top of the structures responsible of supporting the aerodynamic loads (statically and cycling), aircrafts requires the use of complex systems, which are defined in the design stage and in the operating process, to ensure continued airworthiness of aircraft. Some of these systems are essential for keeping the aircraft flying (e.g. flight controls), being requested by the airworthiness regulations to duplicate and segregate them in order to minimize the dramatic consequences of any system's incorrect function.

The overall manufacturing of each system (system devices and routing) of the aircraft, together with its respective installation in the aircraft is difficult in itself, and concerns a long development process due to its complexity, involving a high cost and significant lead time in the overall aircraft production.

Also, once the aircraft enters into service, several frequent maintenance tasks are mandatory over most of these systems and sub-systems to secure their well-performance due to their importance. These scheduled maintenance tasks, together with any additional ones coming from any function issue detected along them, have a relevant cost for the airliner and may have an impact on the aircraft departure.

As consequence, any improvement which could be implemented in terms of systems element reduction or simplification will have an important benefit not only for the aircraft manufacturers, but also for the airliners which are responsible for the in-service life of the airplane.

Document EP2336021-A2 describes a structure that may comprise a skin member and a hat stringer. The hat stringer may include a base portion and first and second webs extending outwardly from the base portion. Each one of the first and second webs may be comprised of a wrap laminate having wrap plies and a cover laminate having cover plies. The first and second webs may be interconnected by a cap. The hat stringer and skin member may be co-cured.

Both the hydraulic and the electric systems are critical in commercial aircrafts. On the one hand, the hydraulic system aims to provide power to actuate some of the most important devices in aircraft operation, such as spoilers, control surfaces, high lift devices, landing gear, engine reverses, brakes, nose wheel steering, etc. Thus, for safety reasons, due to its critical functionality in aircraft operation, hydraulic systems are normally redundant and segregated keeping some security distances. On the other hand, electric systems are traditionally responsible for providing power to the engine starter, the avionics of the aircraft (e.g. Flight Control System (FCS)), the lightning system, cockpit lightning, warnings, cabin emergency lightning, etc.

In commercial aircrafts, the routing of these hydraulic and electrical systems is compound by hundreds of meters of rigid pipes, flexible hoses, and wiring, which carry either a compressed fluid or electricity all over the aircraft. These hundreds of meters of routes lead to the installation of thousands of fittings with their corresponding installation time, effort and cost.

It would therefore be desirable to provide technical means that simplify the hydraulic and electric systems' routings, while reducing the installation and maintenance tasks associated with these systems.

### Summary of the invention

The present invention overcomes the above mentioned drawbacks by providing a composite structure for an aircraft having an integrated insert for receiving attachment devices, which simplifies the hydraulic and electric systems' routings, and results in significant savings in the installation and maintenance tasks of the aircraft.

One aspect of the present invention refers to a composite structure for an aircraft having at least one insert for receiving attachment devices. Each insert comprises a core having a mayor dimension and containing at least one through-hole, and a composite strip arrangement formed by a first section, surrounding the core and attached to said core by an adhesive polymeric layer, and a second section, attached to the first section and comprising at least one free end for its attachment to the composite structure.

In addition, the insert comprises one metal bush received in the at least one through-hole of the core, said metal bush being formed by aluminum alloy, or titanium, or steel alloy.

At least one part of both the first and the second portion of the composite strip arrangement is disposed over a first surface of the composite structure, such that the mayor dimension of the core is positioned substantially transversal to said first surface of the composite structure. This positioning of the core helps to support the hydraulic and electric systems' routings, and eases their attachment to the core. Further, this positioning provides the clearance requested between the routing and the composite structure.

The insert is co-cured with the composite structure to thus obtain a composite structure with an integrated insert for the reception of attachment devices.

The invention thus provides a new composite structure equipped with at least one insert that may be used as a support for receiving attachment devices intended to attach external routing (pipes, hoses, wirings, etc.) to the composite structure.

With the insert, the overall use of brackets and other supports for the attachment of external routing are reduced. This reduction of brackets involves a recurrent cost reduction, not only by the part manufacturing reduction, but also by the labour hours required for their installation in the aircraft.

Further, the composite structure of the invention avoids the need of installing supports in the structure before the final structural parts are integrated. This way, the invention facilitates the installation, specially, in areas where the access is limited, or there is no accessibility at all from either side of the structure.

Also, the invention eliminates the need to perform holes in primary or secondary composite structures for the attachment of external routing. As known, making holes increases the local stress in the proximal area of the hole, so that this absence of holes decreases local stress and gives rise to the possibility of using smaller thicknesses in the laminates, and thus achieve a weight reduction.

In addition, the integration of the insert in the composite structure provides the potentiality of withstanding higher loads (weight of the routing, inertia loads, and vibration loads such as wind milling and SEI (Sustained Engine Imbalance)) with less weight than current composite structure designs.

The invention thus also provides a complete system capable of both supporting the external routing and attaching it to the composite structure.

Finally, another aspect of the invention refers to a method for manufacturing a composite structure having at least one insert for receiving attachment devices. The method comprises the steps of:
- providing at least one insert comprising a core having a mayor dimension and containing at least one through-hole, and a composite strip arrangement formed by a first section surrounding the core and attached to said core by an adhesive polymeric layer, and a second section comprising at least one free end,
- placing at least one part of both the first and the second portion of the composite strip arrangement over a first surface of the composite structure, such that the mayor dimension of the core is positioned substantially transversal to said first surface of the composite structure, and
- curing the at least one insert and the composite structure together to thus obtain a composite structure with an integrated insert for receiving attachment devices.

The method of the invention provides high rate productions, due to the reduction of the labour hours required for electric and hydraulic systems installation, and the related lead time reduction.

The method of the invention provides a simplified structure design that reduces maintenance tasks and maintenance downtime, and which also offers the opportunity to standardize the brackets used for composite structures under different geometries and sizes. This also involves a non-recurring cost reduction thanks to the reduced number of assembly jigs required.

Finally, the method speeds up repair operations thanks to the simple attachment of the routings to the structure, minimizing the time required to disassemble and assemble if needed.

### Brief description of the drawings

For a better comprehension of the invention, the following drawings are provided for illustrative and non-limiting purposes, wherein:
Figure 1 shows a schematic perspective view of a composite structure having an insert for receiving attachment devices, according to a preferred embodiment of the present invention.
Figure 2 shows a detailed view of an attachable system formed by a composite structure having an insert, and an attachment device according to a first preferred embodiment of the present invention.
Figure 3 shows a detailed view of an attachable system comprising an attachment device according to a second preferred embodiment of the present invention.
Figure 4 shows a detailed view of an attachable system comprising an attachment device according to a third preferred embodiment of the present invention.
Figure 5 shows a detailed view of an attachable system comprising an attachment device according to a fourth preferred embodiment of the present invention.
Figures 6a-6b show a detailed view of an attachable system comprising an attachment device according to a fifth preferred embodiment of the present invention. Drawing A shows a perspective view. Drawing B shows a cross-sectional view.
Figures 7a-7b show a detailed view of an attachable system having a core according to a sixth preferred embodiment of the present invention. Drawing A shows a perspective view of an insert with several through-holes. Drawing B shows a perspective view of external routing attached to the insert shown in drawing A.
Figures 8a-8c show different steps of a method for manufacturing a composite structure according to a preferred embodiment of the invention. Drawing A shows the core and the composite strip arrangement. Drawing B shows the insert and the composite structure to which the insert is going to be co-cured. Drawing C shows the composite structure with the integrated insert.

### Preferred embodiments of the invention

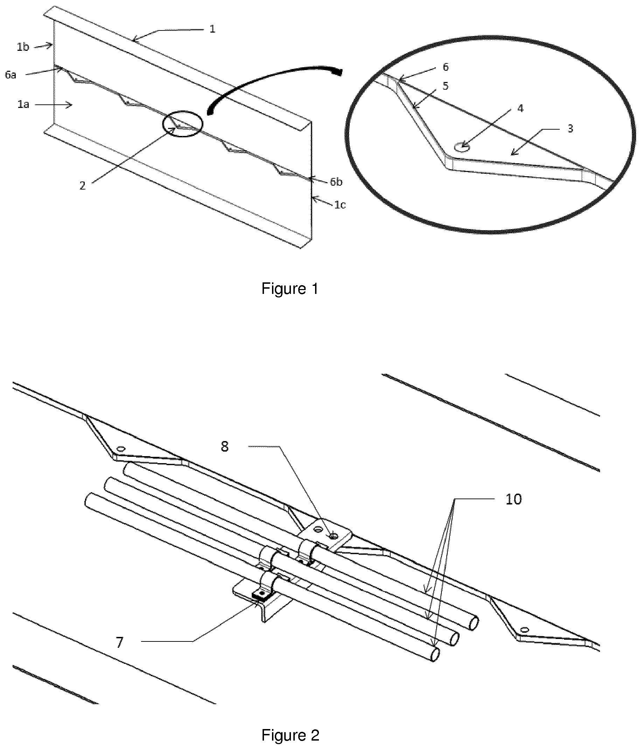

Figure 1 shows a composite structure 1 for an aircraft according to a preferred embodiment. According to the invention, the composite structure 1 has at least one insert 2 for receiving attachment devices, wherein the at least one insert 2 comprises a core 3 and a composite strip arrangement.

As shown in the detailed view of Figure 1, the composite structure 1 comprises several inserts 2 in where each core 3 contains at least one through-hole 4 intended to receive attachment devices for attaching external routing 10 to the structure 1.

Each core 3 has a mayor dimension for being positioned substantially transversal with respect to a first surface 1a of the composite structure 1. This positioning will help to support the hydraulic and electric systems' routings, easing their attachment to the core 3.

As also shown in Figure 1, the composite strip arrangement is formed by several first sections 5 and one second section 6 attached to the first sections 5. Every first section 5 is disposed around every core 3 and attached to it by an adhesive polymeric layer, while the second section 6 comprises two free ends 6a, 6b extended between the two opposite edges 1b, 1c of the composite structure 1 for its attaching to the structure 1.

Inserts 2 (core 3 and composite strip arrangement) are co-cured with the composite structure 1 to thus obtain a composite structure 1 with integrated inserts 2 for the reception of attachment devices.

According to a preferred embodiment, the core 3 is formed by foam polymer, or short-fibre thermoplastic polymer, such as polyetherimide ULTEM^{™}, or fiberglass.

According to another preferred embodiment, the core 3 has a polygonal shape, and preferably a triangular shape. The triangular shape offers an easily distinguished major dimension for its positioning in the structure 1, and provides sufficient support for the attachment devices and more free space for the installation tasks.

According to another preferred embodiment, the at least one through-hole 4 of the core 3 is positioned in the outermost section of the core 3 to provide greater clearance and easier installation of the attachment devices.

According to another preferred embodiment, the insert 2 comprises one metal bush received in the at least one through-hole 4 of the core 3, wherein said metal bush is formed by aluminum alloy, or titanium, or steel alloy.

Figures 2 to 6, and Figure 7b show another aspect of the present invention consisting of an attachable system for an aircraft, comprising a composite structure 1 having an insert 2 as above described, and an attachment device comprising a clamp 7 attaching the external routing 10, and fixed to the insert 2 via the at least one through-hole 4 of the core 3.

As shown in Figure 2 and according to a preferred embodiment, the attachment device may further comprise a bracket 8 configured to support the clamp 7, and being partially disposed onto the insert 2 and fixed to said insert 2 by the at least one through-hole 4 of the core 3.

According to another preferred embodiment, the bracket 8 and the clamp 7 are formed in a single body.

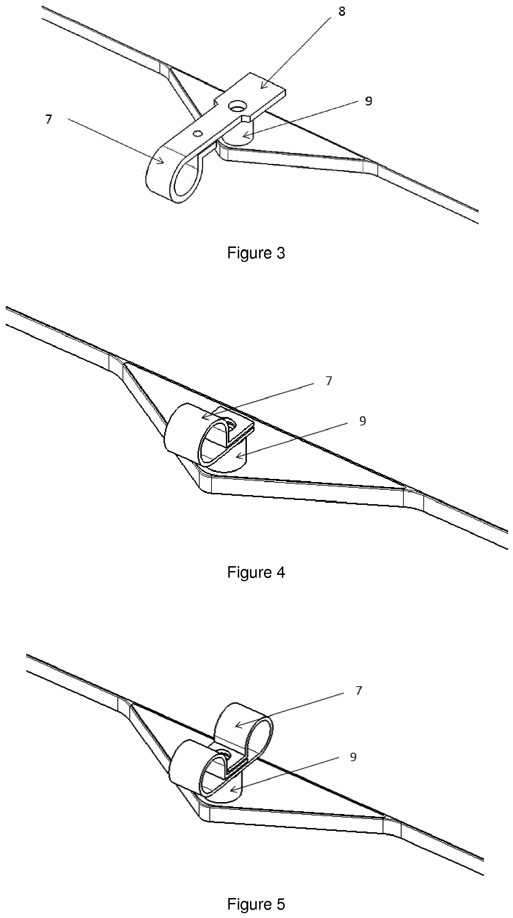

Figure 3 shows a detailed view of an attachable system having an attachment device formed by a spacer 9, and a P clamp 7 formed together with a bracket 8 in a single body. The spacer 9 is configured as a tubular body, and disposed between the clamp 7 and the at least one through-hole 4 of the core 3, to provide clearance between the attachment device and the insert 2. The bracket 8 provides support for both the clamp 7 and the external routing 10, facilitating thus the installation of the external routing 10.

Figure 4 shows a detailed view of an attachable system with a simplified attachment device that comprises a spacer 9 and a P clamp 7. This device may be used when only one pipe (hose or wire) has to be attached, and there is no need for providing clearance between the pipe (hose or wire) and the composite structure 1.

Figure 5 shows a detailed view of an attachable system with another simplified attachment device that comprises a spacer 9 and a double P clamp 7. This device may be used when two pipes (hoses or wires) have to be attached, and there is no need for providing clearance between the pipes (hoses or wires) and the composite structure 1.

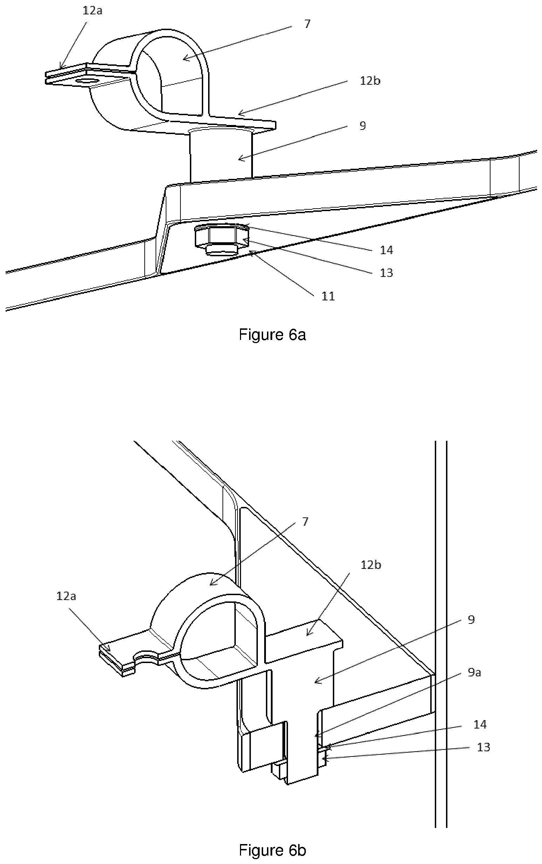

Figures 6a and 6b show a perspective and a cross-sectional detailed view of an attachment device comprising a clamp 7 having an annular body and two opposing projections 12a, 12b, one projection 12a being perforated to receive fastening means for retaining the external routing 10 inside the clamp 7, and the other projection 12b being terminated with a spacer 9 configured as a tubular body to provide clearance with the insert 2, wherein the spacer 9 has a threaded end 9a to fix the clamp 7 to the insert 2 via the at least one through-hole 4 of the core 3.

The attachment device further comprises a fastener 11 attaching the clamp 7 to the insert 2 via the at least one through-hole 4 of the core 3.

The clamp 7 of Figure 6 can be directly screwed to the nut 13 with no need of using a screw. Furthermore, in order to stop the clamp 7 from unscrewing itself from the nut 13 (due to possible vibrations) a self-locking nut 13 or any other similar device may be used. Preferably, a washer 14 will be placed between the nut 13 and core 3.

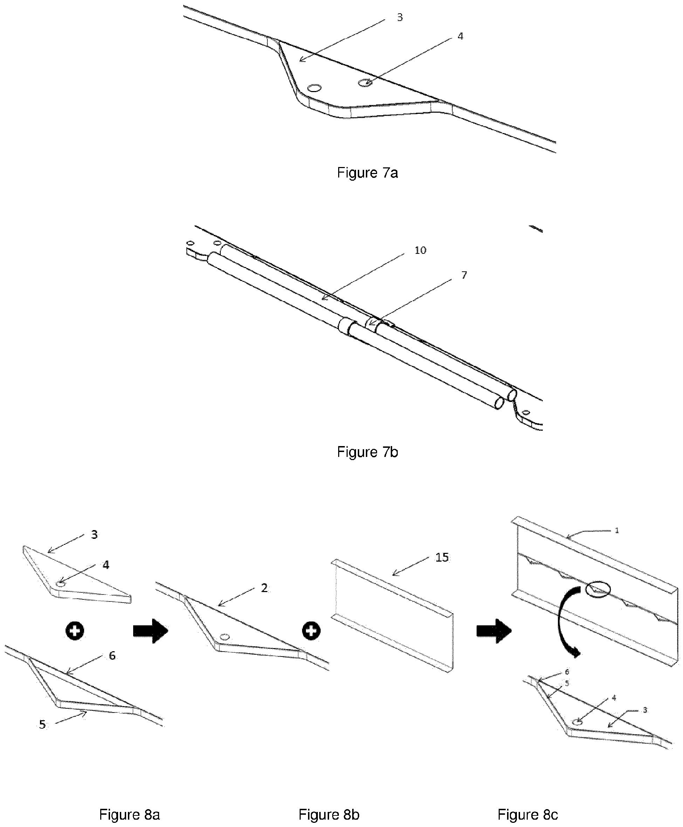

Figures 7a-7b show a detailed view of an attachable system having a core 3 according to another preferred embodiment. As shown in Figure 7a, the core 3 may have several through-holes 4, misaligned to prevent clamps 7 from colliding when attached to the insert 2. Figure 7b shows a perspective view of external routing 10 attached to the core 3 shown in Figure 7a.

Another aspect of the invention refers to a method for manufacturing a composite structure 1 having at least one insert 2 for receiving attachment devices. The method comprises:
- providing at least one insert 2 comprising a core 3 having a mayor dimension and containing at least one through-hole 4, and a composite strip arrangement formed by a first section 5 surrounding the core 3 and attached to said core 3 by an adhesive polymeric layer, and a second section 6 comprising at least one free end 6a,
- placing at least one part of both the first 5 and the second portion 6 of the composite strip arrangement over a first surface 1a of the composite structure 1, such that the mayor dimension of the core 3 is positioned substantially transversal to said first surface 1a of the composite structure 1,
- curing the at least one insert 2 and the composite structure 1 together to thus obtain a composite structure 1 with an integrated insert 2 for receiving attachment devices.

Figures 8a-8c show different steps of this method. Figure 8a shows the step of providing at least one core 3 having a mayor dimension and containing at least one through-hole 4, and at least one composite strip arrangement formed by at least one first section 5, and a second section 6 comprising at least one free end 6a for its attachment to a plain composite structure 15. Figure 8b shows the step of providing an insert 2, said insert 2 comprising the core 3 and the first section 5 surrounding the core 3 and attached to said core 3 by an adhesive polymeric layer, and the plain composite structure 15 to which the insert 2 is going to be co-cured. Figure 8c shows the composite structure 1 once the insert 2 has been co-cured with the plain composite structure 15. Figure 8c also shows a detailed view of the composite structure 1 comprising several inserts 2 and the composite strip arrangement extended along the entire length of the structure 1.

According to another preferred embodiment, the method further comprises fixing a clamp 7 to the insert 2 via the at least one through-hole 4 of the core 3) to thus allow attaching external routing 10 to the insert 2.

## Claims

1. A composite structure (1) for an aircraft, having at least one insert (2) for receiving attachment devices, each insert (2) comprising:
- a core (3) having a mayor dimension and containing at least one through-hole (4), and
- a composite strip arrangement formed by a first section (5) surrounding the core (3) and attached to said core (3) by an adhesive polymeric layer, and a second section (6) attached to the first section (5) and comprising at least one free end (6a),
- wherein at least one part of both the first (5) and the second portion (6) of the composite strip arrangement is disposed over a first surface (1a) of the composite structure (1), such that the mayor dimension of the core (3) is positioned substantially transversal to said first surface (1a) of the composite structure (1),
- wherein the insert (2) is co-cured with the composite structure (1) to thus obtain a composite structure (1) with an integrated insert (2) for the reception of attachment devices,
**characterised in that**, the insert (2) comprises one metal bush received in the at least one through-hole (4) of the core (3), said metal bush being formed by aluminum alloy, or titanium, or steel alloy.

2. A composite structure (1) for an aircraft, having at least one insert (2) for receiving attachment devices, according to claim 1, wherein the composite structure (1) has opposite edges (1b, 1c), and wherein the second section (6) comprises two free ends (6a, 6b) extended between the opposite edges (1b, 1c) to provide support for the attachment devices along the structure (1).

3. A composite structure (1) for an aircraft, having at least one insert (2) for receiving attachment devices, according to any of the preceding claims, wherein the core (3) is formed by foam polymer, or short-fibre thermoplastic polymer, such as polyetherimide ULTEM^{™}, or fiberglass.

4. A composite structure (1) for an aircraft, having at least one insert (2) for receiving attachment devices, according to any of the preceding claims, wherein the core (3) has a polygonal shape, and preferably a triangular shaped.

5. A composite structure (1) for an aircraft, having at least one insert (2) for receiving attachment devices, according to any of the preceding claims, wherein the at least one through-hole (4) of the core (3) is positioned in the outermost section of the core (3) to provide greater clearance for the attachment devices.

6. An attachable system for an aircraft, comprising a composite structure (1) having at least one insert (2) according to any of the claims 1 to 5, and an attachment device comprising a clamp (7) configured to attach external routing (10) and fixed to the insert (2) via the at least one through-hole (4) of the core (3).

7. An attachable system for an aircraft, according to claim 6, wherein the attachment device further comprises a bracket (8) configured to support the clamp (7), the bracket (8) being partially disposed onto the insert (2) and fixed to said insert (2) by the at least one through-hole (4) of the core (3).

8. An attachable system for an aircraft, according to claim 7, wherein the bracket (8) and the clamp (7) are formed in a single body.

9. An attachable system for an aircraft, according to any of claims 7-8, wherein the attachment device further comprises a fastener (11) attaching the clamp (7) to the insert (2) via the at least one through-hole (4) of the core (3).

10. An attachable system for an aircraft, according to any of claims 6-9, wherein the attachment device further comprises a spacer (9) configured as a tubular body, disposed between the clamp (7) and the at least one through-hole (4) of the core (3) to provide clearance between the attachment device and the insert (2).

11. An attachable system for an aircraft, according to claim 6, wherein the clamp (7) has an annular body and two opposing projections (12a, 12b), one projection (12a) being perforated to receive fastening means for retaining the external routing (10) inside the clamp (7), and the other projection (12b) being terminated with a spacer (9) configured as a tubular body to provide clearance with the insert (2), wherein the spacer (9) has a threaded end (9a) to fix the clamp (7) to the insert (2) via the at least one through-hole (4) of the core (3).

12. An attachable system for an aircraft, according to any of claims 6-10, wherein the clamp (7) consists of a saddle clamp, a P-clamp, or a double P clamp.

13. A method for manufacturing a composite structure (1) having at least one insert (2) for receiving attachment devices, the method comprising:
- providing at least one insert (2) comprising
- a core (3) having a mayor dimension and containing at least one through-hole (4),
- a composite strip arrangement formed by a first section (5) surrounding the core (3) and attached to said core (3) by an adhesive polymeric layer, and a second section (6) comprising at least one free end (6a),
- and one metal bush received in the at least one through-hole (4) of the core (3), said metal bush being formed by aluminum alloy, or titanium, or steel alloy,
- placing at least one part of both the first (5) and the second portion (6) of the composite strip arrangement over a first surface (1a) of the composite structure (1), such that the mayor dimension of the core (3) is positioned substantially transversal to said first surface (1a) of the composite structure (1),
- curing the at least one insert (2) and the composite structure (1) together to thus obtain a composite structure (1) with an integrated insert (2) for receiving attachment devices.

14. A method for manufacturing a composite structure (1) having at least one insert (2) for receiving attachment devices, according to claim 13, further comprising fixing a clamp (7) to the insert (2) via the at least one through-hole (4) of the core (3), to thus allow attaching external routing (10) to the insert (2).

## Patentansprüche

1. Verbundstruktur (1) für ein Flugzeug mit mindestens einem Einsatz (2) zum Aufnehmen von Befestigungsvorrichtungen, wobei jeder Einsatz (2) Folgendes umfasst:
- einen Kern (3) mit einer größten Abmessung, der mindestens ein Durchgangsloch (4) enthält, und
- eine Verbundleistenanordnung, die aus einem ersten Abschnitt (5), der den Kern (3) umgibt und an dem Kern (3) durch eine klebende Polymerschicht befestigt ist, und einem zweiten Abschnitt (6) gebildet ist, der an dem ersten Abschnitt (5) befestigt ist und mindestens ein freies Ende (6a) umfasst,
- wobei mindestens ein Teil sowohl des ersten (5) als auch des zweiten Abschnitts (6) der Verbundleistenanordnung über einer ersten Oberfläche (1a) der Verbundstruktur (1) so angeordnet ist, dass sich die größte Abmessung des Kerns (3) im Wesentlichen quer zu der ersten Oberfläche (1a) der Verbundstruktur (1) befindet,
- wobei der Einsatz (2) zusammen mit der Verbundstruktur (1) ausgehärtet wird, um so eine Verbundstruktur (1) mit einem integrierten Einsatz (2) zum Aufnehmen von Befestigungsvorrichtungen zu erhalten,
**dadurch gekennzeichnet, dass**:
der Einsatz (2) eine Metallbuchse umfasst, die in dem mindestens einen Durchgangsloch (4) des Kerns (3) aufgenommen ist, wobei die Metallbuchse aus einer Aluminium-, Titan- oder Stahllegierung gebildet ist.

2. Verbundstruktur (1) für ein Flugzeug mit mindestens einem Einsatz (2) zum Aufnehmen von Befestigungsvorrichtungen gemäß Anspruch 1, wobei die Verbundstruktur (1) gegenüberliegende Kanten (1b, 1c) aufweist, und wobei der zweite Abschnitt (6) zwei freie Enden (6a, 6b) umfasst, die sich zwischen den gegenüberliegenden Kanten (1b, 1c) erstrecken, um eine Abstützung für die Befestigungsvorrichtungen entlang der Struktur (1) zu schaffen.

3. Verbundstruktur (1) für ein Flugzeug mit mindestens einem Einsatz (2) zum Aufnehmen von Befestigungsvorrichtungen gemäß einem der vorhergehenden Ansprüche, wobei der Kern (3) aus Schaumpolymer oder thermoplastischem Kurzfaserpolymer wie beispielsweise Polyetherimid ULTEM^{™} oder Glasfaser gebildet ist.

4. Verbundstruktur (1) für ein Flugzeug mit mindestens einem Einsatz (2) zum Aufnehmen von Befestigungsvorrichtungen gemäß einem der vorhergehenden Ansprüche, wobei der Kern (3) eine mehreckige Form, vorzugsweise eine dreieckige Form, aufweist.

5. Verbundstruktur (1) für ein Flugzeug mit mindestens einem Einsatz (2) zum Aufnehmen von Befestigungsvorrichtungen gemäß einem der vorhergehenden Ansprüche, wobei sich das mindestens eine Durchgangsloch (4) des Kerns (3) im äußersten Abschnitt des Kerns (3) befindet, um einen größeren Freiraum für die Befestigungsvorrichtungen zu schaffen.

6. Befestigbares System für ein Flugzeug, umfassend eine Verbundstruktur (1) mit mindestens einem Einsatz (2) gemäß einem der Ansprüche 1 bis 5 und eine Befestigungsvorrichtung, die eine Klemme (7) umfasst, die dazu ausgelegt ist, eine externe Führung (10) zu befestigen, und über das mindestens eine Durchgangsloch (4) des Kerns (3) an dem Einsatz (2) angebracht ist.

7. Befestigbares System für ein Flugzeug gemäß Anspruch 6, wobei die Befestigungsvorrichtung ferner eine Halterung (8) umfasst, die dazu ausgelegt ist, die Klemme (7) zu tragen, wobei die Halterung (8) teilweise auf dem Einsatz (2) angeordnet und an dem Einsatz (2) durch das mindestens eine Durchgangsloch (4) des Kerns (3) angebracht ist.

8. Befestigbares System für ein Flugzeug gemäß Anspruch 7, wobei die Halterung (8) und die Klemme (7) aus einem Stück gebildet sind.

9. Befestigbares System für ein Flugzeug gemäß einem der Ansprüche 7-8, wobei die Befestigungsvorrichtung ferner ein Befestigungselement (11) umfasst, das die Klemme (7) über das mindestens eine Durchgangsloch (4) des Kerns (3) an dem Einsatz (2) befestigt.

10. Befestigbares System für ein Flugzeug gemäß einem der Ansprüche 6-9, wobei die Befestigungsvorrichtung ferner einen Abstandshalter (9) umfasst, der als rohrförmiger Körper ausgebildet ist und zwischen der Klemme (7) und dem mindestens einen Durchgangsloch (4) des Kerns (3) angeordnet ist, um einen Abstand zwischen der Befestigungsvorrichtung und dem Einsatz (2) zu schaffen.

11. Befestigbares System für ein Flugzeug gemäß Anspruch 6, wobei die Klemme (7) einen ringförmigen Körper und zwei gegenüberliegende Vorsprünge (12a, 12b) aufweist, wobei ein Vorsprung (12a) perforiert ist, um ein Befestigungsmittel zum Festhalten der externen Führung (10) innerhalb der Klemme (7) aufzunehmen, und der andere Vorsprung (12b) mit einem Abstandshalter (9) abgeschlossen ist, der als rohrförmiger Körper ausgebildet ist, um einen Freiraum mit dem Einsatz (2) zu schaffen, wobei der Abstandshalter (9) ein Gewindeende (9a) aufweist, um die Klemme (7) über das mindestens eine Durchgangsloch (4) des Kerns (3) an dem Einsatz (2) zu befestigen.

12. Befestigbares System für ein Flugzeug gemäß einem der Ansprüche 6-10, wobei die Klemme (7) aus einer Sattelklemme, einer P-Klemme oder einer Doppel-P-Klemme besteht.

13. Verfahren zum Herstellen einer Verbundstruktur (1) mit mindestens einem Einsatz (2) zum Aufnehmen von Befestigungsvorrichtungen, wobei das Verfahren Folgendes umfasst:
- Bereitstellen mindestens eines Einsatzes (2), umfassend
- einen Kern (3) mit einer größten Abmessung, der mindestens ein Durchgangsloch (4) enthält,
- eine Verbundleistenanordnung, die aus einem ersten Abschnitt (5), der den Kern (3) umgibt und an dem Kern (3) durch eine klebende Polymerschicht befestigt ist, und einem zweiten Abschnitt (6) mit mindestens einem freien Ende (6a) gebildet ist,
- und eine Metallbuchse, die in dem mindestens einen Durchgangsloch (4) des Kerns (3) aufgenommen ist, wobei die Metallbuchse aus einer Aluminium-, Titan- oder Stahllegierung gebildet ist,
- Anordnen mindestens eines Teils sowohl des ersten (5) als auch des zweiten Abschnitts (6) der Verbundleistenanordnung über einer ersten Oberfläche (1a) der Verbundstruktur (1) so, dass sich die größte Abmessung des Kerns (3) im Wesentlichen quer zu der ersten Oberfläche (1a) der Verbundstruktur (1) befindet,
- Aushärten des mindestens einen Einsatzes (2) und der Verbundstruktur (1) zusammen, um so eine Verbundstruktur (1) mit einem integrierten Einsatz (2) zum Aufnehmen von Befestigungsvorrichtungen zu erhalten.

14. Verfahren zum Herstellen einer Verbundstruktur (1) mit mindestens einem Einsatz (2) zum Aufnehmen von Befestigungsvorrichtungen gemäß Anspruch 13, ferner umfassend das Anbringen einer Klemme (7) an dem Einsatz (2) über das mindestens eine Durchgangsloch (4) des Kerns (3), um so das Befestigen einer externen Führung (10) an dem Einsatz (2) zu ermöglichen.

## Revendications

1. Structure composite (1) pour aéronef, comportant au moins un insert (2) destiné à recevoir des dispositifs d'attache, chaque insert (2) comprenant :
un noyau (3) ayant une dimension majeure et contenant au moins un trou traversant (4), et
un agencement de bande composite formé d'une première section (5) entourant le noyau (3) et attachée audit noyau (3) par une couche polymère adhésive, et d'une seconde section (6) attachée à la première section (5) et comprenant au moins une extrémité libre (6a),
au moins une partie de la première (5) et de la seconde portion (6) de l'agencement de bande composite étant disposée sur une première surface (1a) de la structure composite (1), de sorte que la dimension majeure du noyau (3) soit positionnée sensiblement transversalement à ladite première surface (1a) de la structure composite (1),
l'insert (2) étant co-durci avec la structure composite (1) pour ainsi obtenir une structure composite (1) avec un insert intégré (2) pour la réception de dispositifs d'attache,
**caractérisée en ce que**,
l'insert (2) comprend une douille métallique reçue dans l'au moins un trou traversant (4) du noyau (3), ladite douille métallique étant formée d'un alliage d'aluminium, ou de titane, ou d'un alliage d'acier.

2. Structure composite (1) pour aéronef, comportant au moins un insert (2) destiné à recevoir des dispositifs d'attache, selon la revendication 1, la structure composite (1) ayant des bords (1b, 1c) opposés, et la seconde section (6) comprenant deux extrémités libres (6a, 6b) étendues entre les bords (1b, 1c) opposés pour fournir un support aux dispositifs d'attache le long de la structure (1).

3. Structure composite (1) pour aéronef, comportant au moins un insert (2) destiné à recevoir des dispositifs d'attache, selon l'une quelconque des revendications précédentes, le noyau (3) étant formé de mousse polymère, ou de polymère thermoplastique à fibres courtes, tel que le polyétherimide ULTEM^{™}, ou de fibre de verre.

4. Structure composite (1) pour aéronef, comportant au moins un insert (2) destiné à recevoir des dispositifs d'attache, selon l'une quelconque des revendications précédentes, le noyau (3) ayant une forme polygonale, et de préférence une forme triangulaire.

5. Structure composite (1) pour aéronef, comportant au moins un insert (2) destiné à recevoir des dispositifs d'attache, selon l'une quelconque des revendications précédentes, l'au moins un trou traversant (4) du noyau (3) étant positionné dans la section la plus extérieure du noyau (3) pour assurer un plus grand espace libre pour les dispositifs d'attache.

6. Système attachable pour aéronef, comprenant une structure composite (1) comportant au moins un insert (2) selon l'une quelconque des revendications 1 à 5, et un dispositif d'attache comprenant une bride de serrage (7) conçue pour attacher un acheminement externe (10) et fixée à l'insert (2) par l'intermédiaire de l'au moins un trou traversant (4) du noyau (3).

7. Système attachable pour aéronef, selon la revendication 6, le dispositif d'attache comprenant en outre un support (8) conçu pour supporter la bride de serrage (7), le support (8) étant partiellement disposé sur l'insert (2) et fixé audit insert (2) par l'au moins un trou traversant (4) du noyau (3).

8. Système attachable pour aéronef, selon la revendication 7, le support (8) et la bride de serrage (7) étant formés dans un seul corps.

9. Système attachable pour aéronef, selon l'une quelconque des revendications 7 à 8, le dispositif d'attache comprenant en outre une attache (11) attachant la bride de serrage (7) à l'insert (2) par l'intermédiaire de l'au moins un trou traversant (4) du noyau (3).

10. Système attachable pour aéronef, selon l'une quelconque des revendications 6 à 9, le dispositif d'attache comprenant en outre une entretoise (9) conçue comme un corps tubulaire, disposée entre la bride de serrage (7) et l'au moins un trou traversant (4) du noyau (3) pour assurer un espace libre entre le dispositif d'attache et l'insert (2).

11. Système attachable pour aéronef, selon la revendication 6, la bride de serrage (7) ayant un corps annulaire et deux saillies (12a, 12b) opposées, une saillie (12a) étant perforée pour recevoir des moyens de fixation pour retenir l'acheminement externe (10) à l'intérieur de la bride de serrage (7), et l'autre saillie (12b) étant terminée par une entretoise (9) conçue comme un corps tubulaire pour assurer un espace libre avec l'insert (2), l'entretoise (9) ayant une extrémité filetée (9a) pour fixer la bride de serrage (7) à l'insert (2) par l'intermédiaire de l'au moins un trou traversant (4) du noyau (3).

12. Système attachable pour aéronef, selon l'une quelconque des revendications 6 à 10, la bride de serrage (7) étant une contre-bride d'étanchéité, une bride de serrage en P ou une bride de serrage en double P.

13. Procédé de fabrication d'une structure composite (1) comportant au moins un insert (2) destiné à recevoir des dispositifs d'attache, comprenant les étapes consistant à :
fournir au moins un insert (2) comprenant
un noyau (3) ayant une dimension majeure et contenant au moins un trou traversant (4),
un agencement de bande composite formé d'une première section (5) entourant le noyau (3) et attachée audit noyau (3) par une couche polymère adhésive, et d'une seconde section (6) comprenant au moins une extrémité libre (6a),
et une douille métallique reçue dans l'au moins un trou traversant (4) du noyau (3), ladite douille métallique étant formée d'un alliage d'aluminium, ou de titane, ou d'un alliage d'acier,
placer au moins une partie de la première (5) et de la seconde portion (6) de l'agencement de bande composite sur une première surface (1a) de la structure composite (1), de sorte que la dimension majeure du noyau (3) soit positionnée sensiblement transversalement à ladite première surface (1a) de la structure composite (1),
durcir ensemble l'au moins un insert (2) et la structure composite (1) pour ainsi obtenir une structure composite (1) avec un insert intégré (2) destiné à recevoir des dispositifs d'attache.

14. Procédé de fabrication d'une structure composite (1) comportant au moins un insert (2) destiné à recevoir des dispositifs d'attache, selon la revendication 13, comprenant en outre l'étape consistant à fixer une bride de serrage (7) à l'insert (2) par l'intermédiaire de l'au moins un trou traversant (4) du noyau (3), pour permettre ainsi l'attache d'un routage externe (10) à l'insert (2).
